# EUROPÄISCHE PATENTSCHRIFT

(11) **EP 2 886 199 B1**
(45) Veröffentlichungstag und Bekanntmachung des Hinweises auf die Patenterteilung: **27.02.2019**
(21) Anmeldenummer: 14004167.4
(22) Anmeldetag: 11.12.2014
(51) Int. Cl.: B05B 15/50, F16B 21/18

(54) **Befestigung der Luftkappe einer Lackierpistole**
Mounting of the air cap of a paint spray gun
Fixation du capuchon d'air pour un pistolet de peinture

(30) Priorität: 18.12.2013 DE 202013105779 U
(43) Veröffentlichungstag der Anmeldung: 24.06.2015
(73) Patentinhaber: SATA GmbH & Co. KG, 70806 Kornwestheim (DE)
(72) Erfinder: Gehrung, Ralf, 70192 Stuttgart (DE)

(56) Entgegenhaltungen:
- DE-U1-202010 012 449
- US-A- 3 417 650

## Beschreibung

Die Erfindung betrifft einen Luftdüsenabschluss für eine Lackierpistole nach dem Oberbegriff des Anspruchs 1.

Im Bereich der Lackier- und Farbspritztechnik kommen sogenannte Lackierpistolen zum Einsatz. Hierbei handelt es sich um Vorrichtungen, denen sowohl Lack oder Farbe in flüssiger Form als auch Druckluft zugeführt wird und welche den Lack bzw. die Farbe unter Beigabe der Druckluft in kleinste Tröpfchen, den sogenannten Sprühstrahl, aufteilen, mit welchem die zu lackierende Oberfläche überstrichen wird. Die Zugabe von Farbe kann beispielsweise durch einen Farbschlauch, durch oben aufgesetzte, sogenannte Fließbecher oder durch unten angehängte, sogenannte Hängebecher erfolgen. Die Farbe wird aus diesen Bechern bzw. Zuführungen einer sogenannten Farbdüse zugeführt, deren Öffnung über eine Düsennadel vom Benutzer regulierbar ist Die Farbdüse ist umgeben von einer Luftdüse, welche als Ringdüse ausgebildet ist und welcher die komprimierte Luft zugeführt wird. Diese verlässt die Ringdüse mit hoher Geschwindigkeit und reißt dabei die aus der Farbdüse austretende Farbe mit sich, zerstäubt diese und erzeugt auf diese Weise den feinen Sprühstrahl. Eine solche Lackier- bzw. Farbspritzpistole ist Gegenstand der EP 0710506 A1, deren Offenbarungsgehalt zum Gegenstand dieser Beschreibung gemacht wird. Die Druckschrift zeigt in Figur 2 auch den genauen Aufbau der Farbdüse und der Ringdüse, zusammen mit einem Luftdüsenabschluss, welcher eine Luftkappe aufweist.

Bei modernen Farbspritzpistolen ist der Luftdüsenabschluss so gestaltet, dass er eine Luftkappe aufweist, welche eine axiale Bohrung zur Aufnahme der Farbdüse im aufgeschraubten Zustand unter Bildung eines Ringspalts zum Durchtritt ausströmender Luft und einen radial nach außen gerichteten ersten Ringflansch aufweist. Ferner weist der Luftdüsenabschluss einen die Luftkappe umschließenden Luftdüsenring mit einem radial nach innen gerichteten zweiten Ringflansch und einem Innengewinde zur Verschraubung des Luftdüsenabschlusses mit einem Außengewinde der Lackierpistole auf. Hierbei ist die Luftkappe im verschraubten Zustand bei aneinander anliegenden Ringflanschen zwischen Lackierpistole und Luftdüsenring eingespannt. Ferner ist auf der Außenseite der Luftkappe eine Ringnut mit einem Sicherungsring vorgesehen, welcher den Luftdüsenring im nicht verschraubten Zustand, wobei also der Luftdüsenabschluss von der Lackierpistole abgenommen ist, gegen Loslösung von der Luftkappe sichert.

Derartige Luftdüsenabschlüsse weisen den Nachteil auf, dass der Sicherungsring schwer zu handhaben ist und es damit bei der Reinigung der Lackierpistole schwerfällt, den Luftdüsenring von der Luftkappe abzunehmen.

Aufgabe der Erfindung ist es, einen besser handhabbaren und leichter zu reinigenden Luftdüsenabschluss für eine Lackierpistole bereitzustellen.

Diese Aufgabe wird gelöst mit dem Luftdüsenabschluss des Anspruchs 1. Vorteilhafte Ausgestaltungen sind den Unteransprüchen entnehmbar.

Wenn der Sicherungsring ein nach innen ragendes elastisches Einschnappmittel zum Einschnappen in die Ringnut aufweist, kann er leichter aufgesetzt und abgenommen werden, sodass ein Zerlegen des Luftdüsenabschlusses leichter und schneller geht und somit die Reinigung der Lackierpistole erleichtert wird.

Besonders vorteilhaft ist dabei die Ausgestaltung des Sicherungsrings als durchgehender Kunststoffring mit mindestens einer nach innen ragenden elastischen Befestigungsnase zum Einschnappen in die Ringnut, da dieser schnell und einfach abgezogen und wieder eingesetzt werden kann. Es können auch mehrere Befestigungsnasen umlaufend entlang der Innenseite des Sicherungsrings ausgebildet sein.

Um eine leichte Montage und Demontage zu ermöglichen, sollte die Breite der Ringnut die Stärke des Sicherungsrings wenigstens geringfügig übersteigen.

In einer weiteren bevorzugten Ausführungsform übersteigt die Breite der Ringnut die Stärke des Sicherungsrings um etwa 20 % oder mehr, wodurch der Sicherungsring innerhalb der Ringnut axial verschiebbar ist. Hierbei kann die Höhe des Sicherungsrings etwa die dreifache Tiefe der Ringnut oder mehr betragen, wodurch der Sicherungsring deutlich erkennbar ist. Der Benutzer kann somit auf den ersten Blick erkennen, dass der Luftdüsenabschluss mit einem Sicherungsring gesichert ist. Darüber hinaus kann durch eine geeignete Farbwahl dieses Sicherungsrings gleichzeitig eine Markierung erfolgen, z.B der Hinweis auf eine bestimmte Lackierpistole oder eine Lackierpistole mit einer bestimmten Düsengröße.

Erfindungsgemäß ist die Außenkante des Sicherungsrings in Richtung des Luftdüsenrings axial verbreitert ausgebildet und mit dieser Verbreiterung fest mit dem Luftdüsenring verbunden. Hierdurch ergibt sich eine besonders prägnante Kennzeichnungsmöglichkeit, insbesondere wenn die Außenkante des Sicherungsrings im Bereich des Luftdüsenrings eine zusätzliche, radial nach innen weisende Erstreckung aufweist und der Luftdüsenring mit dem Sicherungsring nach Art eines Presssitzes verbunden ist und wenn der Sicherungsring eine Oberfläche aufweist, welche sich optisch von der Oberfläche des Luftdüsenrings und der Luftkappe unterscheidet.

Ein Ausführungsbeispiel der Erfindung wird im Folgenden unter Bezugnahme auf die begleitenden Zeichnungen näher erläutert. Diese zeigen:
- **Fig. 1**: eine perspektivische Darstellung einer zusammengebauten Lackierpistole nach dem Stand der Technik;
- **Fig. 2**: die in Fig. 1 dargestellte Lackierpistole mit in Explosionsdarstellung gezeigtem Luftdüsenabschluss;
- **Fig. 3**: die in Fig. 1 dargestellte Lackierpistole im Längsschnitt;
- **Fig. 4**: das in Fig. 3 dargestellte Detail Y;
- **Fig. 5**: eine perspektivische Darstellung einer ersten Ausführungsform einer Lackierpistole mit erfindungsgemäßem Luftdüsenabschluss;
- **Fig. 6**: einer Darstellung der Lackierpistole gemäß Fig. 5 mit Explosionsdarstellung des Luftdüsenabschlusses;
- **Fig. 7**: die in Fig. 5 dargestellte Lackierpistole im Längsschnitt;
- **Fig. 8**: das in Fig. 7 dargestellte Detail Y;
- **Fig. 9**: eine perspektivische Darstellung einer zweiten Ausführungsform einer erfindungsgemäßen Lackierpistole;
- **Fig. 10**: die Lackierpistole gemäß Fig. 9 mit dem Luftdüsenabschluss in Explosionsdarstellung;
- **Fig. 11**: die in Fig. 9 dargestellte Lackierpistole im Längsschnitt; und
- **Fig. 12**: das in Fig. 11 bezeichnete Detail Y.

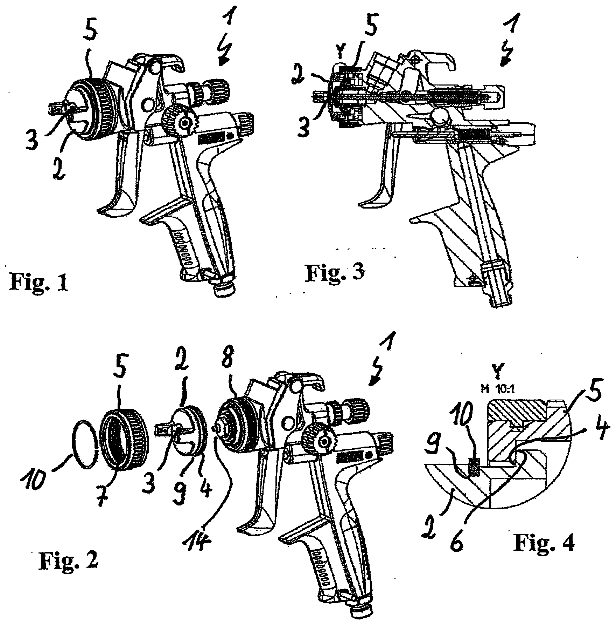

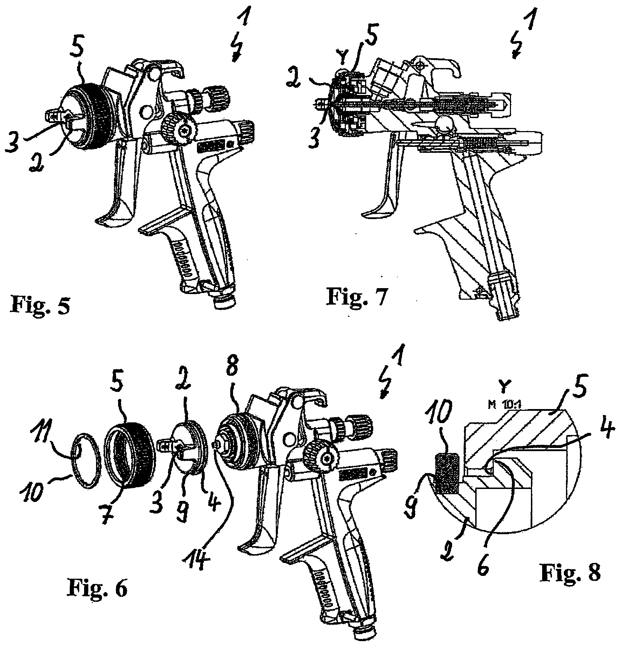

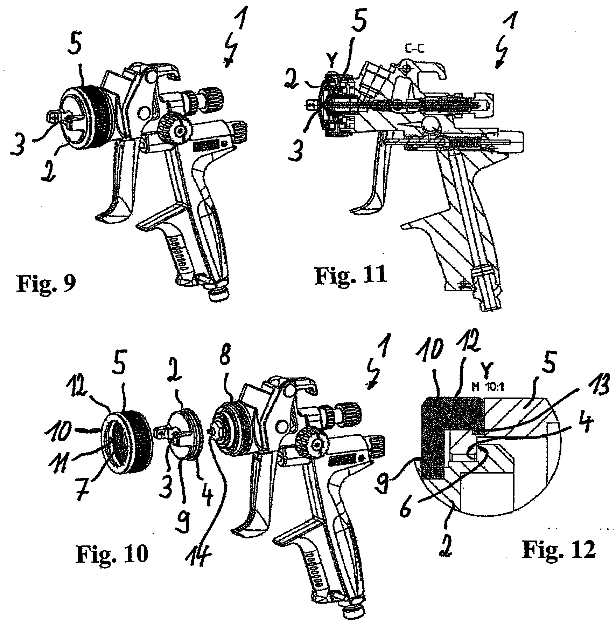

Die Figuren 1 bis 4 zeigen eine Lackierpistole nach dem Stand der Technik, während die Figuren 5 bis 8 eine nicht zur Erfindung gehörende beispielhafte Ausführungsform einer Lackierpistole mit Luftdüsenabschluss und die Figuren 9 bis 12 eine Ausführungsform einer Lackierpistole mit erfindungsgemäßem Luftdüsenabschluss zeigen.

In der folgenden Beschreibung wird nicht auf die an sich bekannten Details einer Lackierpistole eingegangen, sondern lediglich auf deren Luftdüsenabschluss, und zwar zunächst unter Beschreibung eines Luftdüsenabschlusses aus dem Stand der Technik gemäß Figuren 1 - 4. Der dort gezeigte Luftdüsenabschluss einer Lackierpistole 1 weist einen auf ein Außengewinde 8 der Lackierpistole aufschraubbaren Luftdüsenring 5 auf. Innerhalb dieses Luftdüsenrings 5 und im angeschraubten Zustand von diesem an der Lackierpistole 1 fixiert, befindet sich eine Luftkappe 2 mit einer axialen Bohrung 3 zum Durchtritt ausströmender Luft während des Betriebs der Lackierpistole 1. Innerhalb dieser axialen Bohrung 3 befindet sich die hier nicht im Einzelnen dargestellte und beschriebene Farbdüse, die in den Zeichnungen mit der Bezugsziffer 14 versehen ist Der Vollständigkeit halber sei darauf hingewiesen, dass die aus der Bohrung 3 austretende Luft beim Betrieb der Lackierpistole 1 die aus der Farbdüse austretende Farbe herauszieht, fein zerstäubt und so den Sprühstrahl erzeugt. In dem in Figuren 1 bis 4 dargestellten Beispiel nach dem Stand der Technik weist die Luftkappe 2 darüber hinaus sogenannte, nicht einzeln bezeichnete seitliche Hörner auf, welche ebenfalls Bohrungen zum Austritt von Luft aufweisen, die im Betrieb der Lackierpistole 1 dazu dienen, den an sich konischen Sprühstrahl flacher zu drücken.

Der Luftdüsenring 5 weist einen radial nach innen gerichteten zweiten Ringflansch 6 auf, der mit einem ersten, radial nach außen gerichteten ersten Ringflansch 4 der Luftkappe 2 zusammenwirkt. Im angeschraubten Zustand, wie er in Figur 4 im Einzelnen dargestellt ist, drückt dieser zweite Ringflansch 6 des Luftdüsenrings 5 auf den ersten Ringflansch 4 der Luftkappe 2 und drückt somit die Luftkappe 2 an die Farbdüse 14, wenn der Luftdüsenring 5 auf dem Außengewinde 8 der Lackierpistole 1 festgeschraubt wird. Hierbei findet auch eine automatische Zentrierung statt, so dass die Luftkappe 2 sauber an der Lackierpistole 1 anliegt.

Um zu verhindern, dass sich die Einheit aus Luftdüsenring 5 und Luftkappe 2 im abgeschraubten Zustand des Luftdüsenrings 5 voneinander trennt, weist die Lackierpistole 1 nach dem Stand der Technik einen Sicherungsring 10 auf, welcher in einer Ringnut 9 der Luftkappe 2 fixiert ist und über den Außendurchmesser der Luftkappe 2 hervorsteht, so dass der Luftdüsenring 5 nicht von der Luftkappe 2 herabfallen kann, sondern durch den Sicherungsring 10 fixiert ist. Dieser Sicherungsring kann ein offener Sprengring aus Federstahl sein.

Bei der beispielhaften Ausführungsform gemäß Figuren 5 bis 8 ist ebenfalls ein Luftdüsenring 5 vorgesehen, welcher eine vergleichbare Luftkappe 2 an die Lackierpistole 1 andrückt, wenn er auf das Außengewinde 8 der Lackierpistole 1 aufgeschraubt wird. Ferner weist auch diese Ausführungsform einen Sicherungsring 10 auf, der ebenfalls das Herabfallen des Luftdüsenrings 5 von der Luftkappe 2 im abgeschraubten Zustand verhindert. Wie aus Figur 6 ersichtlich ist, weist dieser Sicherungsring 10 jedoch mehrere nach innen ragende elastische Einschnappmittel in Gestalt von Kunststoffnasen auf, da der gesamte Sicherungsring 10 aus Kunststoff gefertigt ist. Auf diese Weise kann der Sicherungsring 10, nachdem der Luftdüsenring 5 auf die Luftkappe 2 aufgesetzt wurde, per Einschnappen in die in Figur 8 dargestellte Position gebracht werden und wird durch die als Einschnappmittel wirkenden Befestigungsnasen 11 dort fixiert. Der Sicherungsring 10 ist, wie Figur 8 entnehmbar ist, auch mit einem größeren Außendurchmesser ausgestattet als es im Stand der Technik gemäß Figuren 1 bis 4 üblich ist, wobei die Höhe des Sicherungsrings 10 im vorliegenden Ausführungsbeispiel etwa die dreifache Tiefe der Ringnut 9 der Luftkappe 2 beträgt. Darüber hinaus unterscheidet sich der Sicherungsring 10 vorteilhaft im Bereich seiner Oberfläche von der Oberfläche des Luftdüsenrings 5 und der Oberfläche der Luftkappe 2.

Auf diese Weise wird ein sicheres Einschnappen des Sicherungsrings 10 über die Befestigungsnasen 11 ermöglicht und der Sicherungsring 10 kann gleichzeitig als Markierung, z.B. als Farbring, dienen, um verschiedene Luftdüsenabschlüsse bzw. Lackierpistolen 1 voneinander zu unterscheiden. Er erfüllt insoweit eine Doppelfunktion als Sicherungsring 10 und Markierungsring.

Bei sogenannten HVLP-Pistolen kann der Sicherungsring 10 grün und bei sogenannten RP-Pistolen blau sein und die Oberfläche des Luftdüsenrings 5 beispielsweise silberfarben sein. In jedem Fall sollten kontrastierende Farben und/oder Muster beim Sicherungsring und beim Luftdüsenring gewählt werden, damit das Vorhandensein eines Sicherungsrings problemlos erkennbar ist.

In den Figuren 9 bis 12 ist eine erfindungsgemäße Ausführungsform dieses Sicherungsrings 10 dargestellt, wobei der Sicherungsring 10 in diesem Falle eine Außenkante 12 aufweist, welche in Richtung des Luftdüsenrings 5 axial verbreitert ausgebildet ist und mit dieser Verbreiterung fest mit dem Luftdüsenring 5 verbunden ist. Hier bilden also Luftdüsenring 5 und Luftkappe 2 eine Einheit, bleiben jedoch dadurch axial gegeneinander verschiebbar, dass die Breite der Ringnut 9 größer ist als die Breite des Sicherungsrings 10 in dem Bereich, in welchem er in die Ringnut eingreift. Bei dieser Ausführungsform weist die Außenkante 12 des Sicherungsrings 10, was besonders gut aus Figur 12 erkennbar ist, im Bereich des Luftdüsenrings 5 eine zusätzliche, radial nach innen weisende Erstreckung 13 auf und der Luftdüsenring 5 ist mit dem Sicherungsring 10 dort nach Art eines Presssitzes verbunden. Somit sind Sicherungsring 10 und Luftdüsenring 5 starr miteinander verbunden und der Sicherungsring 10 greift über die Einschnappmittel bzw. Befestigungsnasen 11 in die Ringnut 9 der Luftkappe 2 ein.

Auch bei dieser Ausführungsform weist der Sicherungsring 10 vorteilhafter Weise eine Oberfläche auf, welche sich von der Oberfläche des Luftdüsenrings 5 und der Luftkappe 2 optisch unterscheidet, so dass er neben seiner Funktion als Sicherungsring auch als optische Kennung verwendet werden kann und somit eine Doppelfunktion erfüllt.

Der Sicherungsring 10 kann entweder als durchgehender oder unterbrochener Ring ausgebildet sein. Er kann aus Kunststoff oder Metall oder einem anderen geeigneten, ausreichend elastischem Werkstoff bestehen. Materialkombinationen sind beim Sicherungsring 10 ebenfalls denkbar; beispielsweise Metall/Kunststoff in der Art, dass der Ring aus einem relativ unelastischen Metall besteht und wenigstens eine elastische Kunststoffnoppe aufweist oder umgekehrt. Wesentlich ist, dass er wenigstens bereichsweise in der Lage ist, mit dem Luftdüsenring 5 eine Rastverbindung, eine Schnappverbindung, eine Klemmverbindung oder dergleichen einzugehen.

Der Sicherungsring 10 kann nur ein elastisches Einschnappmittel in Gestalt einer Befestigungsnase 11 aufweisen, oder eine Vielzahl solcher Befestigungsnasen 11, welche vorzugsweise im Abstand zueinander angeordnet sind. Die Breite der Ringnut 9 übersteigt im vorliegenden Ausführungsbeispiel die Stärke des Sicherungsrings 10 um mindestens 20%, wodurch der Sicherungsring 10 innerhalb der Ringnut 9 problemlos axial verschiebbar ist, was eine ganz besonders leichte Montage und Demontage ermöglicht. Andererseits ermöglicht auch eine ganz geringfügig, etwa 1% breitere Ringnut 9 oder aber eine sehr viel, etwa 90% breitere Ringnut 9 eine relativ gute Aufnahme des Sicherungsrings 10. Theoretisch sind nach oben hin keine Grenzen gesetzt bis auf die, dass noch Material zum Stützen des Sicherungsrings 10 vorhanden sein muss.

Die Höhe des Sicherungsrings 10 sollte mindestens die doppelte bis dreifache Tiefe der Ringnut 9 betragen, sofern der Sicherungsring 10 gleichzeitig Kennzeichnungscharakter haben soll.

## Patentansprüche

1. Luftdüsenabschluss für eine Lackierpistole (1), mit einer Luftkappe (2), welche mindestens eine axiale Bohrung (3) zum Durchtritt ausströmender Luft und einen radial nach außen gerichteten ersten Ringflansch (4) aufweist, sowie einem die Luftkappe (2) umschließenden Luftdüsenring (5) mit einem radial nach innen gerichteten zweiten Ringflansch (6) und einem Innengewinde (7) zur Verschraubung des Luftdüsenabschlusses mit einem Außengewinde (8) der Lackierpistole (1), wobei die Luftkappe (2) im verschraubten Zustand bei aneinander anliegenden Ringflanschen (4, 6) zwischen Lackierpistole (1) und Luftdüsenring (5) eingespannt ist, und eine erste Ringnut (9) mit einem Sicherungsring (10) aufweist, welcher den Luftdüsenring (5) im nicht verschraubten Zustand gegen Loslösung von der Luftkappe (2) sichert, wobei der Sicherungsring (10) mindestens ein nach innen ragendes elastisches Einschnappmittel zum Einschnappen in die Ringnut (9) aufweist und die Aussenkante (12) des Sicherungsrings (10) in Richtung des Luftdüsenrings (5) axial verbreitert ausgebildet ist und mit dieser Verbreiterung fest mit dem Luftdüsenring (5) verbunden ist.

2. Luftdüsenabschluss nach Anspruch 1, **dadurch gekennzeichnet, dass** die Aussenkante des Sicherungsrings (10) im Bereich des Luftdüsenrings (5) eine zusätzliche, radial nach innen weisende Erstreckung (13) aufweist und der Luftdüsenring (5) mit dem Sicherungsring (10) nach Art eines Presssitzes verbunden ist.

3. Luftdüsenabschluss nach Anspruch 1 oder 2, **dadurch gekennzeichnet, dass** der Sicherungsring (10) als durchgehender Kunststoffring ausgebildet ist.

4. Luftdüsenabschluss nach einem der voranstehenden Ansprüche, **dadurch gekennzeichnet, dass** das elastische Einschnappmittel als mindestens eine, nach innen ragende Befestigungsnase (11) ausgebildet ist.

5. Luftdüsenabschluss nach Anspruch 4, **dadurch gekennzeichnet, dass** die Befestigungsnase (11) umlaufend ausgebildet ist.

6. Luftdüsenabschluss nach Anspruch 4 oder 5, **dadurch gekennzeichnet, dass** eine Vielzahl von Befestigungsnasen (11) im Abstand zueinander angeordnet sind.

7. Luftdüsenabschluss nach einem der voranstehenden Ansprüche, **dadurch gekennzeichnet, dass** die Breite der Ringnut (9) die Stärke des Sicherungsrings (10) übersteigt, wodurch der Sicherungsring (10) innerhalb der Ringnut (9) axial verschiebbar ist und die Höhe des Sicherungsrings (10) wenigstens geringfügig größer ist als die Tiefe der Ringnut (9).

8. Luftdüsenabschluss nach Anspruch 7, **dadurch gekennzeichnet, dass** die Breite der Ringnut (9) die Stärke des Sicherungsrings (10) um etwa 20% übersteigt.

9. Luftdüsenabschluss nach einem der Ansprüche 6 bis 8, **dadurch gekennzeichnet, dass** die Höhe des Sicherungsrings (19) etwa die dreifache Tiefe der Ringnut (9) beträgt.

10. Luftdüsenabschluss nach einem der voranstehenden Ansprüche, **dadurch gekennzeichnet, dass** der Sicherungsring (10) eine Oberfläche aufweist, welche sich optisch von der Oberfläche des Luftdüsenrings (5) und der Luftkappe (2) unterscheidet.

## Claims

1. Air nozzle closure for a paint spray gun (1), having an air cap (2) which has at least one axial bore (3) for the passage of outflowing air and a radially outwardly directed first annular flange (4), and having an air nozzle ring (5) which encloses the air cap (2) and has a radially inwardly directed second annular flange (6) and an internal thread (7) for screwing the air nozzle closure to an external thread (8) of the paint spray gun (1), wherein, in the screwed state with the annular flanges (4, 6) bearing against one another, the air cap (2) is clamped in place between the paint spray gun (1) and air nozzle ring (5), and has a first annular groove (9) having a securing ring (10) that secures the air nozzle ring (5) in the non-screwed state against detaching from the air cap (2), wherein the securing ring (10) has at least one inwardly projecting elastic snap-in means for snapping into the annular groove (9) and the outer edge (12) of the securing ring (10) is formed in an axially widened manner in the direction of the air nozzle ring (5) and is connected firmly to the air nozzle ring (5) by way of this widening.

2. Air nozzle closure according to Claim 1, **characterized in that** the outer edge of the securing ring (10) has, in the region of the air nozzle ring (5), an additional, radially inwardly directed extension (13) and the air nozzle ring (5) is connected to the securing ring (10) in the manner of a press fit.

3. Air nozzle closure according to Claim 1 or 2, **characterized in that** the securing ring (10) is configured as a continuous plastics ring.

4. Air nozzle closure according to one of the preceding claims, **characterized in that** the elastic snap-in means is configured as at least one, inwardly projecting fastening lug (11).

5. Air nozzle closure according to Claim 4, **characterized in that** the fastening lug (11) is formed in an encircling manner.

6. Air nozzle closure according to Claim 4 or 5, **characterized in that** a multiplicity of fastening lugs (11) are arranged in a manner spaced apart from one another.

7. Air nozzle closure according to one of the preceding claims, **characterized in that** the width of the annular groove (9) exceeds the thickness of the securing ring (10), with the result that the securing ring (10) is movable axially within the annular groove (9) and the height of the securing ring (10) is at least slightly greater than the depth of the annular groove (9).

8. Air nozzle closure according to Claim 7, **characterized in that** the width of the annular groove (9) exceeds the thickness of the securing ring (10) by about 20%.

9. Air nozzle closure according to one of Claims 6 to 8, **characterized in that** the height of the securing ring (19) amounts to around three times the depth of the annular groove (9).

10. Air nozzle closure according to one of the preceding claims, **characterized in that** the securing ring (10) has a surface that differs visually from the surface of the air nozzle ring (5) and of the air cap (2).

## Revendications

1. Fermeture de buse d'air pour un pistolet de peinture (1), comprenant un chapeau d'air (2), lequel comprend au moins un alésage axial (3) pour le passage de l'air sortant et une première collerette annulaire (4) orientée radialement vers l'extérieur, ainsi qu'une bague de buse d'air (5), entourant le chapeau d'air (2), dotée d'une deuxième collerette annulaire (6) orientée radialement vers l'intérieur et d'un filetage intérieur (7) servant à visser la fermeture de buse d'air sur un filetage extérieur (8) du pistolet de peinture (1), le chapeau d'air (2) étant serré entre le pistolet de peinture (1) et la bague de buse d'air (5) à l'état vissé, lorsque les collerettes annulaires (4, 6) sont en appui l'une contre l'autre, et comprenant une première rainure annulaire (9) dotée d'un anneau de fixation (10), lequel empêche la bague de buse d'air (5) de se détacher du chapeau d'air (2) à l'état non vissé, l'anneau de fixation (10) comprenant au moins un moyen d'encliquetage élastique faisant saillie vers l'intérieur et destiné à s'encliqueter dans la rainure annulaire (9), et le bord extérieur (12) de l'anneau de fixation (10) étant réalisé de manière élargie axialement dans la direction de la bague de buse d'air (5) et étant relié solidement à la bague de buse d'air (5) par cet élargissement.

2. Fermeture de buse d'air selon la revendication 1, **caractérisée en ce que** le bord extérieur de l'anneau de fixation (10) comprend une étendue (13) supplémentaire tournée radialement vers l'intérieur dans la région de la bague de buse d'air (5), et la bague de buse d'air (5) est reliée à l'anneau de fixation (10) à la manière d'un ajustement serré.

3. Fermeture de buse d'air selon la revendication 1 ou 2, **caractérisée en ce que** l'anneau de fixation (10) est réalisé sous forme d'anneau en matière synthétique continu.

4. Fermeture de buse d'air selon l'une des revendications précédentes, **caractérisée en ce que** le moyen d'encliquetage élastique est réalisé sous la forme d'au moins un ergot de fixation (11) faisant saillie vers l'intérieur.

5. Fermeture de buse d'air selon la revendication 4, **caractérisée en ce que** l'ergot de fixation (11) est réalisé de manière périphérique.

6. Fermeture de buse d'air selon la revendication 4 ou 5, **caractérisée en ce qu'**une pluralité d'ergots de fixation (11) sont disposés à distance les uns des autres.

7. Fermeture de buse d'air selon l'une des revendications précédentes, **caractérisée en ce que** la largeur de la rainure annulaire (9) dépasse l'épaisseur de l'anneau de fixation (10), de sorte que l'anneau de fixation (10) est déplaçable axialement à l'intérieur de la rainure annulaire (9) et la hauteur de l'anneau de fixation (10) est au moins légèrement supérieure à la profondeur de la rainure annulaire (9).

8. Fermeture de buse d'air selon la revendication 7, **caractérisée en ce que** la largeur de la rainure annulaire (9) dépasse d'environ 20 % l'épaisseur de l'anneau de fixation (10).

9. Fermeture de buse d'air selon l'une des revendications 6 à 8, **caractérisée en ce que** la hauteur de l'anneau de fixation (19) est égale à approximativement le triple de la profondeur de la rainure annulaire (9).

10. Fermeture de buse d'air selon l'une des revendications précédentes, **caractérisée en ce que** l'anneau de fixation (10) comprend une surface, laquelle diffère visuellement de la surface de la bague de buse d'air (5) et du chapeau d'air (2).
